# EUROPEAN PATENT SPECIFICATION

(11) **EP 3 711 107 B1**
(45) Date of publication and mention of the grant of the patent: **05.01.2022**
(21) Application number: 18857426.3
(22) Date of filing: 14.11.2018
(51) Int. Cl.: H01M 8/0606, H01M 8/0656, H01M 8/04082

(54) **DOMESTIC GENERATOR SYSTEM OF HEAT AND/OR ELECTRICITY COMPRISING A BUFFER SYSTEM**
HAUSHALTSGENERATORSYSTEM FÜR WÄRME UND/ODER ELEKTRIZITÄT MIT EINEM PUFFERSYSTEM
SYSTÈME DE GÉNÉRATEUR DOMESTIQUE DE CHALEUR ET/OU ÉLECTRICITÉ COMPRENANT UN SYSTEME TAMPON

(30) Priority: 15.11.2017 NL 1042646
(43) Date of publication of application: 23.09.2020
(73) Proprietor: Flamco B.V., 3751 LJ Bunschoten (NL)
(72) Inventor: CNOSSEN, Jan Henk, 8723 CP Koudum (NL); REEZIGT, Herman, 8072 HJ Nunspeet (NL)
(74) Representative: Arnold & Siedsma
(86) International application number: PCT/NL2018/050764
(87) International publication number: WO 2019/098829

(56) References cited:
- AU-A4- 2015 100 655
- DE-A1-102010 038 491
- US-A1- 2014 080 026
- US-A1- 2014 302 412
- US-A1- 2016 301 093

## Description

The present disclosure relates to a generator system, for example in a domestic environment, or at least in relation to heating and/or cooling of buildings in general.

In the technical field of buffer and/or generator systems associated with buildings, there's a long felt need for improved generator systems. The present disclosure is directed at furnishing such an improved generator system. To this end, a system is provided with features of appended independent claim 1.

Here, reference is made to known prior-art document US 2016/0301093 A1, which constitutes the closest prior-art and discloses a system for storing energy, said system including a hydrogen production unit for producing hydrogen, a hydrogen storage device for storing hydrogen, with a loading unit for loading a carrier medium with the hydrogen produced in the hydrogen production unit and with an unloading unit for unloading the hydrogen from the loaded carrier medium, a heat generation unit for generating heat and a heat storage unit for storing the heat generated by the heat generation unit, with the heat storage unit connected with the unloading unit in order to supply heat.

Another document constituting the known prior-art is US 2014/0302412 A1, which discloses an arrangement for supplying energy to isolated buildings, said arrangement comprising at least one energy generating installation for providing an electrical current, at least one electrolyser for producing hydrogen from water using the electrical current from the energy generating installation, at least one first chemical reactor for at least partially hydrogenating at least one substrate with an extended π-conjugated system using the hydrogen formed in the electrolyser, at least one storage tank for storing the substrate hydrogenated at least partially in the first chemical reactor, at least one second chemical reactor for at least partially dehydrogenating the at least partially hydrogenated substrate which was produced in the first chemical reactor and stored in the storage tank with the release of hydrogen, and at least one fuel cell for the oxidation of the hydrogen release in the second chemical reactor with the release of energy.

By providing a system with features of appended independent claim 1 it has become possible to store and/or generate heat and/or energy, in particular but not exclusively electrical energy without waste or residues at high efficiency, employing only water and electrical energy, preferably green energy from any green source, such as photo-voltaic converters, wind turbines, co-generating heat and power generators; combined heat and power (CHP) units; thermal power plants, but mains or grid energy may also be involved, wherein the system of the present disclosure even allows for generating energy for supply to the grid.

The disclosure also relates to several non-limiting but preferred embodiments which are apparent from the following embodiment description and/or defined in the appended dependent claims. The appended drawing shows a possible embodiment of a system in accordance with the present disclosure, wherein the same or similar elements, components and functionalities may be designated with the same or other reference signs, and which relates to a non-limiting embodiment. In the drawing:
Figure 1 shows a view of the process underlying a LOHC buffer;
Figure 2 shows the exemplary system according to the present disclosure, and
Figures 3 - 9 show possible functionalities or operational possibilities that can be achieved with the system according to figure 2.

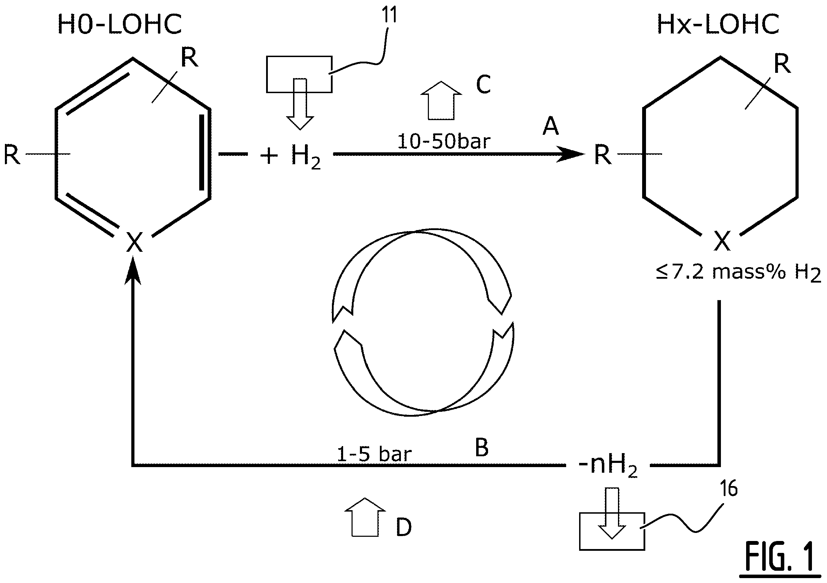

Figure 1 shows a basic view of a process on which a LOHC buffer is based, such as the buffer in the below described figures.

Hydrogen is a highly flammable gas, very unsuitable to be stored due to the inherent risk of fire or explosions. For this reason, hydrogen based fuel cells have been envisaged in automotive applications, but not implemented in practice, as efforts required for safety have proven to form a formidable barrier against application of fuel cells in the automotive field. Further, in association with buildings, hydrogen storage may be accomplished safely more easily, for example in well protected and safe tanks, but the inherent dangers associated with the light flammability of hydrogen, even in storage considered safe, remain.

Through the process of figure 1, along the arrow A, hydrogen H2 from a cheap source or local electrolysis, for example a catalytic hydrogenator 11, may be bound to Dibenzyltoluene to form Perhydro Dibenzyltoluene in an exothermic process of catalytic hydrogenation at for example 10 - 50 bar and at a temperature of for example 150°C, wherein heat is generated, as indicated at arrow C. The resulting substance is harmless and will not ignite, even under severe circumstances of heat and flame.

Conversely, hydrogen may be released from the Perhydro Dibenzyltoluene in an endothermic process along arrow B of catalytic de-hydrogenation at for example 1 - 5 bar and at a temperature of for example 300°C, requiring the input of such heat indicated by arrow D, to free and yield hydrogen and Dibenzyltoluene. Freed hydrogen may be supplied to a fuel cell 16 or even a combustion based apparatus.

Other temperatures and pressures may apply for the mentioned substance as an embodiment of an organic liquid, where it is noted that also other organic or other liquids may be employed for temporary binding and freeing of hydrogen.

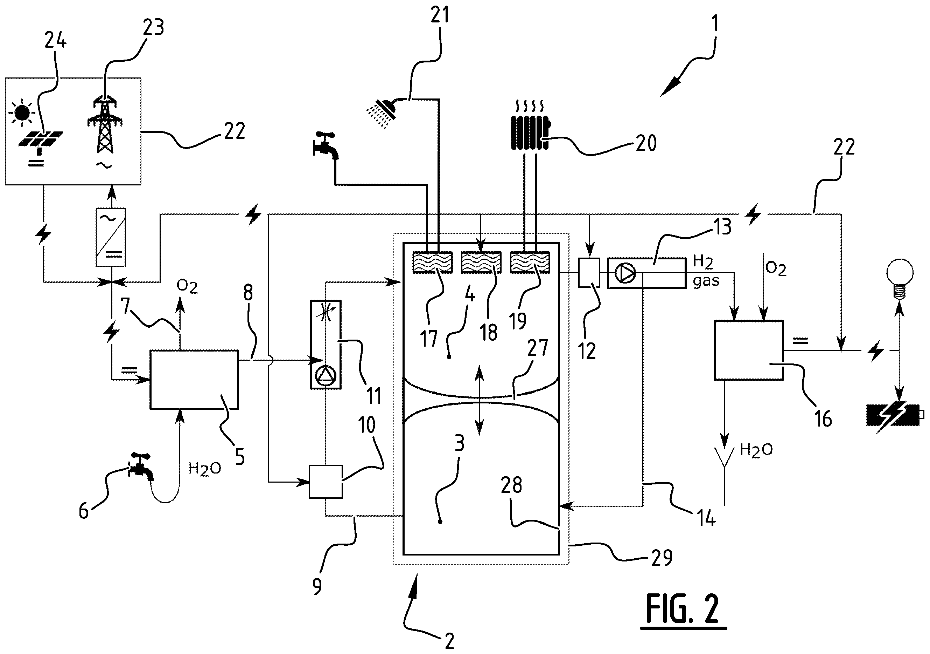

Figure 2 shows a schematic representation of a generator system 1 for at least one of heat and electricity, for use in a heating and/or cooling system of an arbitrary building, for example but not limited to a domestic heating or cooling system. The system 1 comprises a LOHC (Liquid Organic Hydrogen Carrier) based buffer 2, and a hydrogenation unit 5 connected with a water inlet 6 and having an oxygen outlet 7 and a hydrogen outlet 8. The hydrogen outlet 8 is connected to the buffer 2. Buffer 2 comprises a tank 28 and isolation 29.

The buffer 2 is a two compartment buffer, of which a dehydrogenated compartment 3 contains dehydrogenated organic liquid, such as Dibenzyltoluene, and a hydrogenated compartment 4 contains hydrogenated organic liquid, such as Perhydro Dibenzyltoluene, with a membrane 27 there between. The hydrogen outlet 8 of the hydrogenation unit 5 is coupled with a connection 9 between the dehydrogenated compartment 3 to the hydrogenated compartment 4. Optionally, the connection 9 may comprise a heater 10. The heater 10 may be replaced by or complemented with a cooler. The hydrogenation process is an exothermic process, which may involve a rise in temperature of 150°C or even more. A cooler may assist in discharging excess heat. When it is desired to charge the LOHC with hydrogen, when there's no demand for heat from the LOHC for heating of the building, a cooler may be used for discharge of an excess of heat from the LOHC and keep the process of charging hydrogen into the LOHC going, where this would otherwise stop or result in extreme temperature rises. For the same effect, the heater 10, replaced by or complemented with a cooler, may be positioned downstream from a catalytic hydrogenator 11, or even in any of the compartments 3, 4 of the tank 2. The connection 9 further comprises a catalytic hydrogenator 11, downstream from the heater 10, to - in a catalytic process - bind the hydrogen from the hydrogen outlet 8 with the dehydrogenated organic liquid from the dehydrogenated compartment 3, to supply hydrogenated organic liquid to the hydrogenated compartment 4.

Conversely, hydrogen can be freed from the hydrogenated organic liquid in the hydrogenated compartment 4, by circulating the hydrogenated organic liquid back to the dehydrogenated compartment 3 via an optional heater 12 and a dehydrogenation unit 13 down stream from the heater 12, in a further connection 14 between the hydrogenated compartment 4 to the dehydrogenated compartment 3 for release of hydrogen from the organic liquid through a hydrogen supply 15 to a fuel cell 16 for combining atmospheric oxygen with released hydrogen into water. Freed hydrogen may additionally or alternatively be supplied to another useful destination for the freed hydrogen, such as a combustion based apparatus, a direct heating apparatus, a methane producing apparatus, or the like. Dehydrogenated organic liquid is then fed into the dehydrogenated compartment 3 of the buffer 2.

The fuel cell 16 may generate electrical energy and have or be coupled with a DC-AC converter (not shown) for output of AC power. In contrast, the released hydrogen may additionally or alternatively be supplied to a combustion based apparatus, for generating electricity and/or heat, and/or to a direct heating apparatus. Methane could be produced, based on the freed hydrogen.

At least one of the compartments 3, 4 of the buffer 2 comprises at least one heat exchanger 17 - 19 for any or more of heat supply from the compartment 3, 4 having the heat exchanger to an appliance, such as central heating CH system 20 via heat exchanger 19 or a hot water DHW supply 21 via heat exchanger 17. A heat supply is provided to heat the compartment 3, 4 having the heat exchangers 17 - 19, more in particular the heat supply is formed by heat exchanger 18 for heating of hydrogenated compartment 4. More in particular, the hydrogenated compartment 4 comprises the at least one heat exchanger 17 - 19, and even all of the heat exchangers 17 - 19, but any one or more than one of the heat exchangers 17 - 19 could additionally or alternatively be arranged in dehydrogenated compartment 3.

The heat exchanger 18 for heating the hydrogenated compartment 4 in which it is arranged, is connected with a heating power source. More in particular, the heat exchanger 18 comprises an electric heater connected with an electrical power supply 22. The heat exchanger 18 may be replaced by or complemented with a cooler. The hydrogenation process is an exothermic process, which may involve a rise in temperature of 150°C or even more. A cooler may assist in discharging excess heat. When it is desired to charge the LOHC with hydrogen, when there's no demand for heat from the LOHC for heating of the building, a cooler may be used for discharge of an excess of heat from the LOHC and keep the process of charging hydrogen into the LOHC going, where this would otherwise stop or result in extreme temperature rises. For the same effect, the heat exchanger 18, replaced by or complemented with a cooler, may be positioned downstream from the hydrogenated compartment 4, or even in any of the dehydrogenated compartment 3 of the tank 2.

The electric power supply 22 may receive energy from the fuel cell 16 potentially via a DC-AC converter (not shown), from a grid 23 or mains power supply, and/or from greener power sources, such as photo-voltaic PV converters or panels 24, wind turbines, co-generating heat and power generators; combined heat and power (CHP) units; thermal power plants.

The power supply 22 may supply power to also other elements and components of the system 1, such as hydrogenation unit 5, heater 10, further heater 12, dehydrogenation unit 13 and the like.

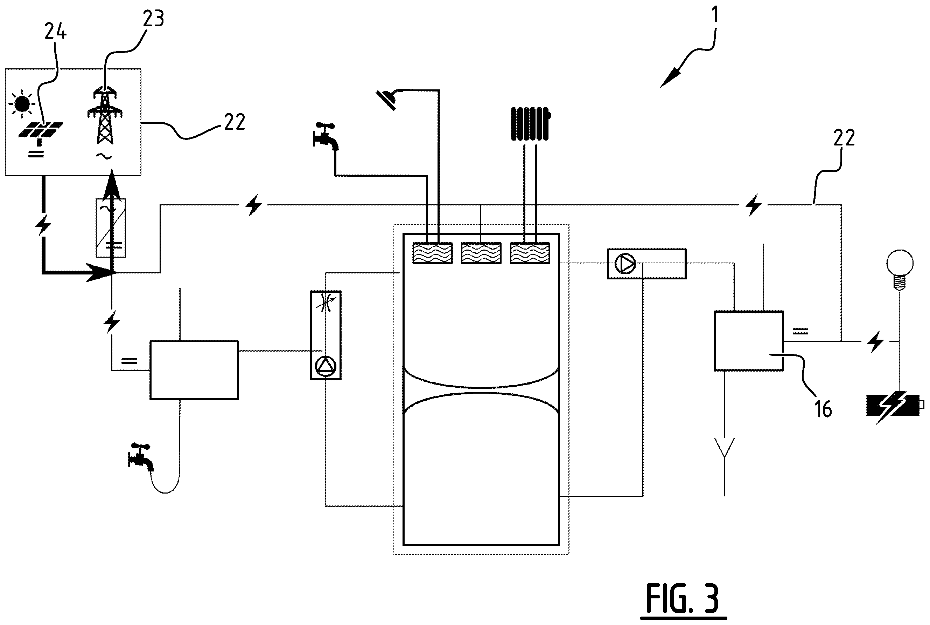

The system 1 may, as an embodiment of the present disclosure, exhibit several operational modes, discussed herein below through reference to figures 3 - 9. Therein, the optional heater 10 and further heater 12 are omitted.

Figure 3 relates to power supply to a grid 23 of electric energy generated with photovoltaic panels 24, via a part of the power supply 22 of the system 1. In this operational mode, no use is made of the LOHC buffer 2, although it may be operational, for example to additionally generate energy using fuel cell 16 to additionally supply the produced energy thereof to the grid 23, as set out below.

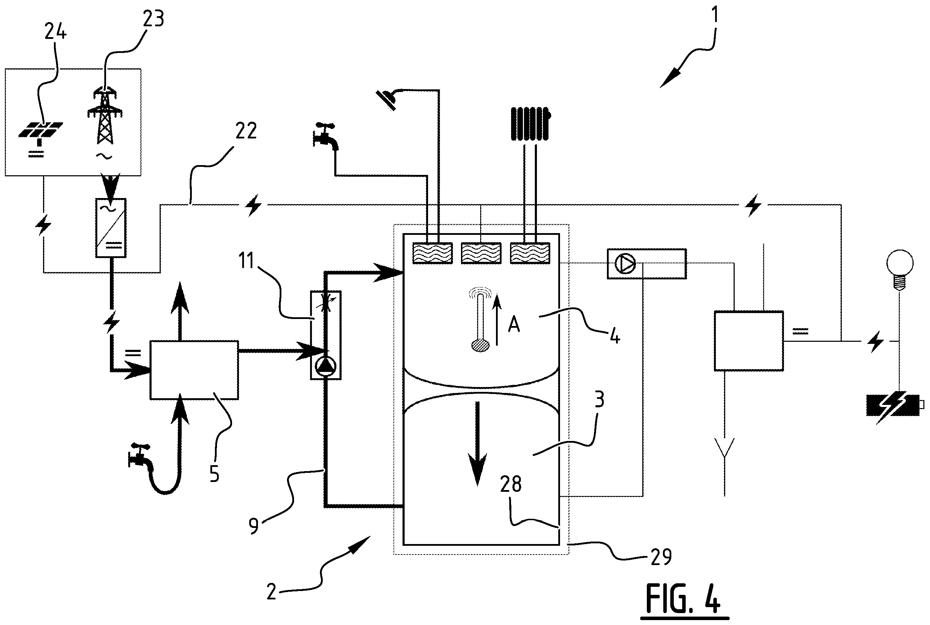

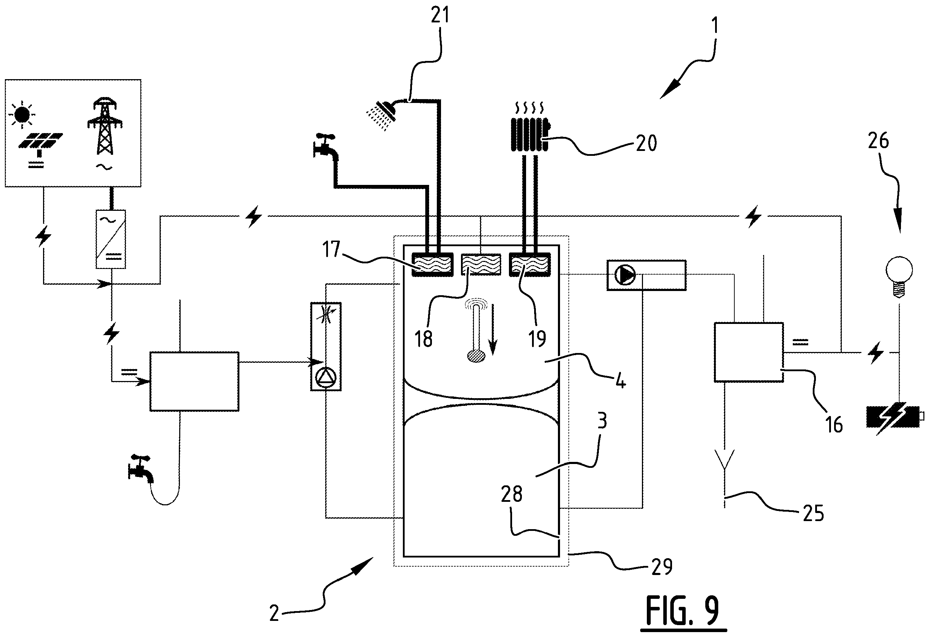

In the operation mode of system 1 in figure 4, power from the grid 23 is used for the hydrogenation unit 5 to electrolyze H2 into the dehydrogenated organic liquid and to produce the hydrogenated liquid and feed this into the hydrogenated compartment 4 of the LOHC buffer 2 via the catalytic hydrogenator 11, which compartment 4 is charged thereby and in which compartment 4 temperature is thereby raised, the rising of temperature being depicted in figure 4 by the thermometer icon and the upward arrow positioned next to it. In figure 9, temperature is lowered, which is indicated by the thermometer icon and a down turned arrow. Heat stored in the hydrogenated compartment 4 may be used for the heat exchangers 17 or 19.

The buffer 2 is a single vessel, wherein a membrane or other separation divides the compartments. In this operational mode, volume of the hydrogenated organic liquid is increased in compartment 4, and compartment 3 may be allowed to decrease in size. The buffer may alternatively comprise completely separate vessels, each defining one of the compartments 3, 4. An advantage of compartments 3, 4, separated by membrane 27 is that heat may be stored, buffered and withdrawn in and from the combined compartments, for the heat appliance, such as the hot water DHW appliance 21 or the central heating system 20, and/or from the heater 18.

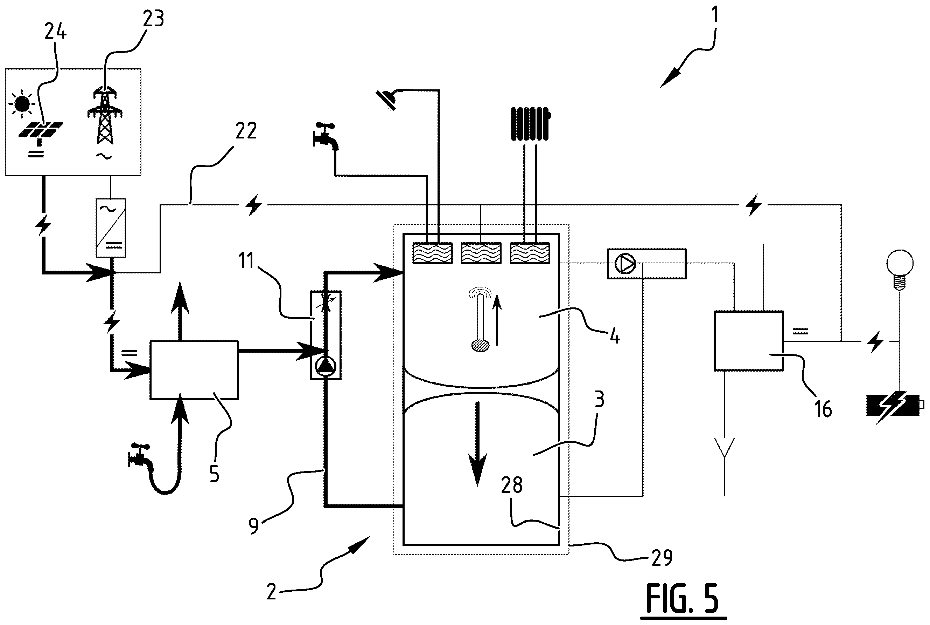

Energy from the grid 23 may be used as an alternative for or in addition to energy from the PV panels 24, for example at night or with cloudy skies, and/or in low energy cost periods of the day, such as at night or at other times when energy suppliers have over capacity. However, in the situation of the operation mode of figure 5, full use is made of energy from the PV panels 24. Depending on the energy supplied by the PV panels 24, additional supply from the grid 24 may be employed, for example to accelerate the process of hydrogenation, or to keep it going sufficiently quickly for later extraction of sufficient amounts of hydrogen.

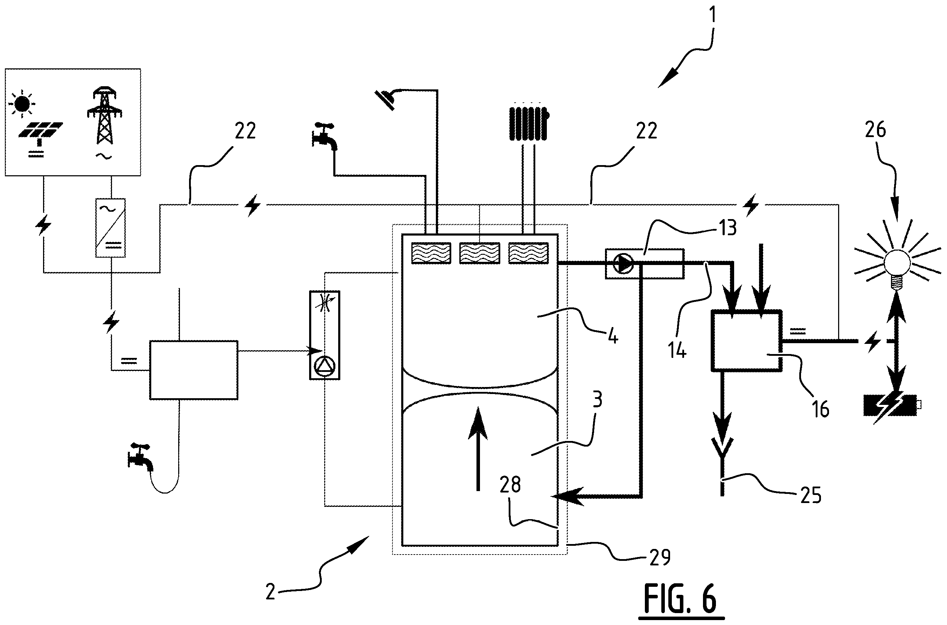

In the operation mode of figure 6, hydrogen is released from the hydrogenated organic liquid from compartment 4 and dehydrogenated organic liquid is fed to the dehydrogenated compartment 3 via the dehydrogenation unit 13 in the further connection 14 between the hydrogenated compartment 4 to the dehydrogenated compartment 3. The fuel cell 16 combines atmospheric oxygen with released hydrogen into water, which is drained at discharge 25, and generates electric energy for use in electrical appliances 26. Although the fuel cell 16 is shown to have a DC output, a DC-AC converter (not shown) may form part of the fuel cell 16 or be connected to it.

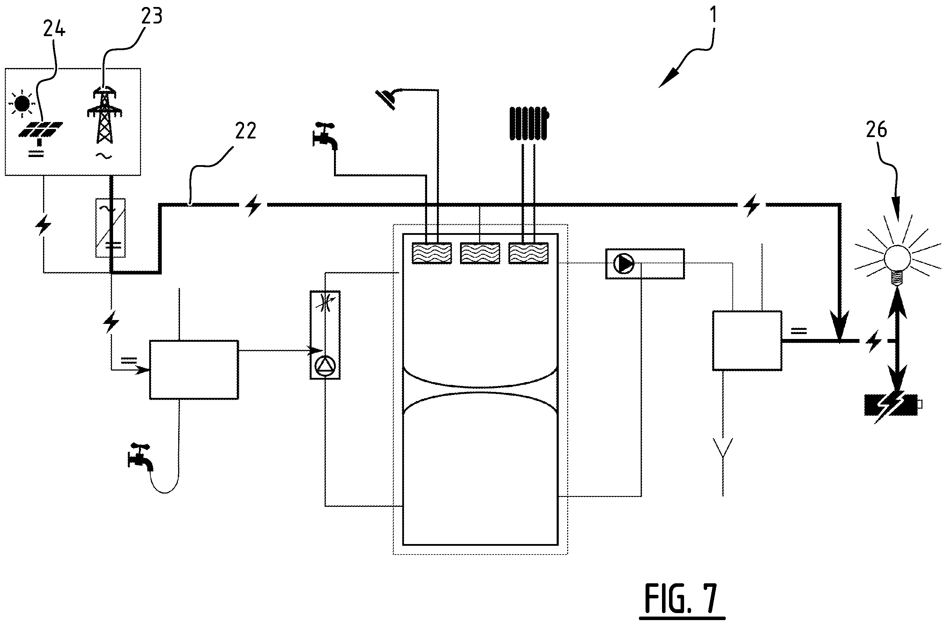

When the LOHC buffer 2 is depleted, energy for the electrical appliances 26 may be supplied from the grid 23 or the PV panels 24, without interaction from the buffer 2, as shown in figure 7.

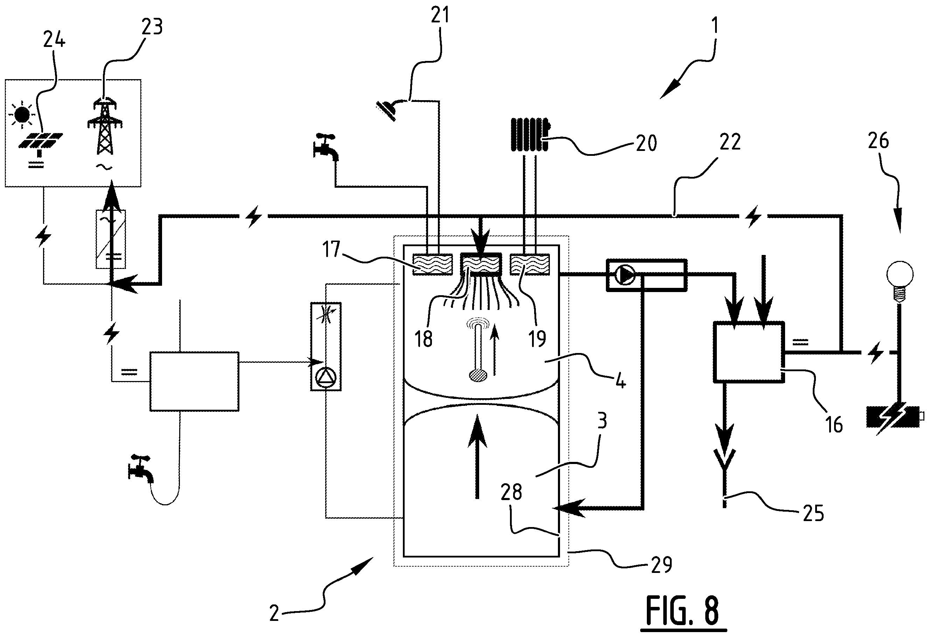

Figure 8 shows that the heater 18, forming a heat exchanger in the compartment 4, is active, raising the temperature in compartment 4. Also, hydrogenated organic liquid is withdrawn from compartment 4, dehydrogenated and dehydrogenated organic liquid is fed to compartment 3, which increases in size thereby. Hydrogen is then, at the fuel cell 16, combined with oxygen to form water and generate electric energy for electric appliances 26 and/or for feedback (sale) to the grid. Preferably, the electrical energy from the fuel cell 16 is mainly used for the heater 18 to heat the LOHC buffer 2 or a least the compartment 4 thereof, and any electrical appliances 26. A surplus may be sold to the grid 24.

Additionally or alternatively, depending on the amount of energy generated by using the fuel cell, the buffer 2, or at least the hydrogenated compartment 4 thereof, may be heated by heater 18 using electric energy from PV panels 24 and/or grid 23.

Heating the buffer 2, or at least the hydrogenated compartment 4 thereof, serves to have a heat reserve buffered therein for later supply of heat to the heat appliances 20, 21, which is the operation mode of figure 9. When charged, the buffer 2 may be held at a temperature of for example 200°C, ready for extraction and supply to the fuel cell 16 of hydrogen. When any of the heat appliances, such as hot water DHW supply 21 or central heating system 20 requires heat, this can be extracted from the LOHC buffer 2 using an appropriate one of the heat exchangers 17, 19. A decrease in temperature will ensue. When heat extraction is completed, or even during heat extraction, heater 18 may be activated to keep the buffer 2 at a desired temperature for hydrogen extraction to the fuel cell 16 to generate electrical energy for the electrical appliances 26.

The processes of the foregoing description are presented as separate. However, the skilled person will surely recognize, also on the basis of the immediately above remarks about activating the heater 18 using energy generated by the fuel cell 16, that many of the above described processes of the operation modes according to the appended drawings can be performed concurrently and/or consecutively. Likewise, other liquids than organic liquid and in particular Perhydro Dibenzyltoluene as the hydrogenated organic liquid and Dibenzyltoluene as the dehydrogenated organic liquid are possible to be employed in any system according to the present disclosure. Likewise PV panels 24 may be omitted or replaced by or augmented with preferably green or at least sustainable power sources, such as wind turbines, co-generating heat and power generators; combined heat and power (CHP) units; thermal power plants, and the like.

## Claims

1. Generator system for at least one of heat and electricity in association with a building, comprising:
- a LOHC (Liquid Organic Hydrogen Carrier) based buffer system, comprising:
^{∗} a water inlet (6);
^{∗} a hydrogenation unit (5) connected with the water inlet and having an oxygen outlet and a hydrogen outlet;
^{∗} a two compartment buffer (2), of which a dehydrogenated compartment contains dehydrogenated organic liquid and a hydrogenated compartment contains hydrogenated organic liquid, where the hydrogen outlet of the hydrogenation unit is coupled with a connection between the dehydrogenated compartment to the hydrogenated compartment;
^{∗} a dehydrogenation unit (13) coupled with a further connection between the hydrogenated compartment to the dehydrogenated compartment for release of hydrogen from the organic liquid through a hydrogen supply to
^{∗} a fuel cell (16) for combining atmospheric oxygen with released hydrogen into water,
wherein at least one of the compartments of the buffer comprises at least one heat exchanger (17,18,19) for any or more of heat supply from the compartment having the heat exchanger to a heat appliance (20,21) and heat supply to the compartment having the heat exchanger.

2. Generator system according to claim 1, wherein the hydrogenated compartment comprises the heat exchanger.

3. Generator system according to claim 1 or 2, wherein the heat exchanger is connected with at least one of a warm or hot water supply "DHW" and a central heating "CH" system.

4. Generator system according to claim 1 or 2, wherein the heat exchanger is connected with a heating power source.

5. Generator system according to claim 4, wherein the heat exchanger comprises an electric heater connected with an electrical power supply.

6. Generator system according to any one or more than one of the preceding claims, further comprising an electric power supply from a group of power supplies, the group comprising: mains or grid power supplies, photo-voltaic converters, wind turbines, co-generating heat and power generators; combined heat and power (CHP) units; thermal power plants.

7. Generator system according to any one or more than one of the preceding claims, wherein the connection from the dehydrogenated compartment to the hydrogenated compartment comprises a heater.

8. Generator system according to claim 7, wherein the heater is arranged in the flow direction from the dehydrogenated compartment to the hydrogenated compartment before the coupling with the hydrogen outlet of the hydrogenation unit.

9. Generator system according to any one or more than one of the proceeding claims, wherein the further connection from the hydrogenated compartment to the dehydrogenated compartment comprises a further heater.

10. Generator system according to claim 9, wherein the further heater is arranged in the flow direction from the hydrogenated compartment to the dehydrogenated compartment before the dehydrogenation unit.

11. Generator system according to any one or more than one of the proceeding claims, wherein the dehydrogenated compartment contains Dibenzyltoluene as the dehydrogenated organic liquid and the hydrogenated compartment contains Perhydro Dibenzyltoluene as the hydrogenated organic liquid.

## Patentansprüche

1. Generatorsystem für Wärme und/oder Elektrizität, in Verbindung mit einem Gebäude,
aufweisend:
ein Puffersystem auf LOHC-Basis (flüssiger organischer Wasserstoffträger), aufweisend:
einen Wassereinlass (6);
eine Hydrierungseinheit (5), die mit dem Wassereinlass verbunden ist
und einen Sauerstoffauslass aufweist
und
einen Wasserstoffauslass;
einen Zweikammer-Puffer (2), von dem eine dehydrierte Kammer eine dehydrierte organische Flüssigkeit und eine hydrierte Kammer eine hydrierte organische Flüssigkeit enthält, wobei der Wasserstoffauslass der Hydriereinheit mit einer Verbindung zwischen der dehydrierten Kammer und der hydrierten Kammer gekoppelt ist;
eine Dehydrierungseinheit (13), die mit einer weiteren Verbindung zwischen der hydrierten Kammer und der dehydrierten Kammer gekoppelt ist, zur Freisetzung von Wasserstoff aus der organischen Flüssigkeit durch eine Wasserstoffzufuhr zu
einer Brennstoffzelle (16) zur Synthese von Luftsauerstoff mit freigesetztem Wasserstoff zu Wasser,
wobei mindestens eine der Kammern des Puffers mindestens einen Wärmetauscher (17, 18, 19) aufweist für eine oder mehrere Arten der Wärmezufuhr von der Kammer die den Wärmetauscher aufweist zu einer Heizvorrichtung (20, 21) und der Wärmezufuhr zu der Kammer die den Wärmetauscher aufweist.

2. Generatorsystem nach Anspruch 1, wobei die hydrierte Kammer den Wärmetauscher aufweist.

3. Generatorsystem nach Anspruch 1 oder 2, wobei der Wärmetauscher mit mindestens einem der beiden Systeme Warm- oder Heißwasserversorgung "DHW" und Zentralheizung "CH" verbunden ist.

4. Generatorsystem nach Anspruch 1 oder 2, wobei der Wärmetauscher mit einer Heizstromquelle verbunden ist.

5. Generatorsystem nach Anspruch 4, wobei der Wärmetauscher eine elektrische Heizung aufweist, die mit einer elektrischen Stromversorgung verbunden ist.

6. Generatorsystem nach einem oder mehreren der vorherigen Ansprüche, ferner aufweisend eine elektrische Stromversorgung aus einer Gruppe von Stromversorgungen, wobei die Gruppe umfasst: Netz- oder Netzstromversorgungen, Photovoltaikkonverter, Windturbinen, Kraft-Wärme-Kopplungs-Generatoren, Kraft-Wärme-Kopplungsanlagen (KWK), Wärmekraftwerke.

7. Generatorsystem nach einem oder mehreren der vorherigen Ansprüche, wobei die Verbindung zwischen der dehydrierten Kammer und der hydrierten Kammer eine Heizung aufweist.

8. Generatorsystem nach Anspruch 7, wobei die Heizung in Strömungsrichtung von der dehydrierten Kammer zu der hydrierten Kammer vor der Kopplung mit dem Wasserstoffauslass der Hydriereinheit angeordnet ist.

9. Generatorsystem nach einem oder mehreren der vorherigen Ansprüche, wobei die weitere Verbindung zwischen der hydrierten Kammer und der dehydrierten Kammer eine weitere Heizung aufweist.

10. Generatorsystem nach Anspruch 9, wobei die weitere Heizung in Strömungsrichtung von der hydrierten Kammer zur dehydrierten Kammer vor der Dehydrierungseinheit angeordnet ist.

11. Generatorsystem nach einem oder mehreren der vorherigen Ansprüche, wobei die dehydrierte Kammer Dibenzyltoluol als dehydrierte organische Flüssigkeit und die hydrierte Kammer Perhydro-Dibenzyltoluol als hydrierte organische Flüssigkeit enthält.

## Revendications

1. Système générateur d'au moins une parmi la chaleur et l'électricité en association avec un bâtiment, comprenant :
- un système tampon à base de LOHC (liquide organique porteur d'hydrogène), comprenant :
^{∗} une entrée d'eau (6) ;
^{∗} une unité d'hydrogénation (5) connectée à l'entrée d'eau et ayant une sortie d'oxygène et une sortie d'hydrogène ;
^{∗} un tampon à deux compartiments (2), dont un compartiment déshydrogéné contient un liquide organique déshydrogéné et dont un compartiment hydrogéné contient un liquide organique hydrogéné, où la sortie d'hydrogène de l'unité d'hydrogénation est couplée avec une connexion entre le compartiment déshydrogéné et le compartiment hydrogéné ;
^{∗} une unité de déshydrogénation (13) couplée avec une connexion supplémentaire entre le compartiment hydrogéné et le compartiment déshydrogéné pour libérer l'hydrogène du liquide organique par l'intermédiaire d'une alimentation en hydrogène vers
^{∗} une pile à combustible (16) pour combiner l'oxygène atmosphérique avec l'hydrogène libéré en eau,
dans lequel au moins l'un des compartiments du tampon comprend au moins un échangeur de chaleur (17,18,19) pour l'une quelconque ou les deux parmi une alimentation en chaleur, du compartiment ayant l'échangeur de chaleur à un appareil de chauffage (20, 21), et une alimentation en chaleur vers le compartiment ayant l'échangeur de chaleur.

2. Système générateur selon la revendication 1, dans lequel le compartiment hydrogéné comprend l'échangeur de chaleur.

3. Système générateur selon la revendication 1 ou 2, dans lequel l'échangeur de chaleur est connecté à au moins un parmi un système d'alimentation en eau tiède ou chaude "DHW" et un système de chauffage central "CH".

4. Système générateur selon la revendication 1 ou 2, dans lequel l'échangeur de chaleur est connecté à une source de puissance de chauffage.

5. Système générateur selon la revendication 4, dans lequel l'échangeur de chaleur comprend un élément chauffant électrique connecté à une alimentation de puissance électrique.

6. Système générateur selon l'une quelconque ou plusieurs des revendications précédentes, comprenant en outre une alimentation de puissance électrique provenant d'un groupe d'alimentations en puissance, le groupe comprenant : des alimentations en puissance de secteur ou de réseau, des convertisseurs photovoltaïques, des éoliennes, des générateurs de cogénération de chaleur et de puissance ; des unités de chaleur et de puissance combinées (CHP) ; des centrales de puissance thermique.

7. Système générateur selon l'une quelconque ou plusieurs des revendications précédentes, dans lequel la connexion du compartiment déshydrogéné au compartiment hydrogéné comprend un élément chauffant.

8. Système générateur selon la revendication 7, dans lequel l'élément chauffant est agencé dans la direction d'écoulement, du compartiment déshydrogéné au compartiment hydrogéné, avant le couplage avec la sortie d'hydrogène de l'unité d'hydrogénation.

9. Système générateur selon l'une quelconque ou plusieurs des revendications précédentes, dans lequel la connexion supplémentaire du compartiment hydrogéné au compartiment déshydrogéné comprend un élément chauffant supplémentaire.

10. Système générateur selon la revendication 9, dans lequel l'élément chauffant supplémentaire est agencé dans la direction d'écoulement, du compartiment hydrogéné au compartiment déshydrogéné, avant l'unité de déshydrogénation.

11. Système générateur selon l'une quelconque ou plusieurs des revendications précédentes, dans lequel le compartiment déshydrogéné contient le dibenzyltoluène comme liquide organique déshydrogéné, et le compartiment hydrogéné contient le perhydro dibenzyltoluène comme liquide organique hydrogéné.
